# EUROPEAN PATENT SPECIFICATION

(11) **EP 2 882 320 B1**
(45) Date of publication and mention of the grant of the patent: **17.10.2018**
(21) Application number: 13827364.4
(22) Date of filing: 06.08.2013
(51) Int. Cl.: B01F 7/00, B01F 13/08, B01F 15/00, B01F 3/04, A47J 31/44, A47J 43/046

(54) **MILK FROTHING DEVICE**
MILCHAUFSCHÄUMVORRICHTUNG
DISPOSITIF POUR FAIRE MOUSSER LE LAIT

(30) Priority: 07.08.2012 US 201261680302 P
(43) Date of publication of application: 17.06.2015
(73) Proprietor: Face Moore International Limited, Hong Kong (CN)
(72) Inventor: NG KWOK YUI, Lawrence, East Point City Tseung Kwan O, Kowloon Hong Kong (CN); MA HING KIN, William, Kowloon Hong Kong (CN)
(74) Representative: Lecomte & Partners
(86) International application number: PCT/IB2013/056424
(87) International publication number: WO 2014/024126

(56) References cited:
- EP-A2- 0 127 971
- WO-A1-2009/135758
- WO-A1-2011/142661
- WO-A1-2011/153587
- CN-A- 102 551 545
- CN-A- 102 551 545
- CN-U- 201 658 273
- CN-U- 202 234 926
- CN-U- 202 234 930
- CN-U- 202 287 931

## Description

### BACKGROUND OF THE INVENTION

### Field of the Invention

The present invention relates generally to kitchen appliances. More particularly, the present invention relates to a food processor which can stir liquid food. More specifically, the present invention relates to a milk frothing device which can stir milk or other milk-based liquids and make milk or other milk-based liquids frothy.

### Description of the Related Art

Agitation of milk in the form of frothing the milk is used e.g. for preparing beverages like cappuccinos, milky coffees, macchiato, etc. that typically comprises a liquid portion like coffee topped with a layer of frothed milk.

Various devices for frothing milk are known in various typed and shapes including simpler domestic ones primarily using physical agitation to froth the milk and typically more professional or advanced ones e.g. using steam from a steam pipe to agitate and thereby froth the milk.

It is generally known that heating or pre-heating the milk typically will enhance the frothing process.

Domestic milk frothing devices typically have one or more agitation elements to be immersed in the milk and driven by hand, electromechanically, or magnetically and thereby froth the milk. A general aim may be to ensure frothing as fast as possible and/or e.g. also as uniformly as possible. The durability of froth, i.e. the general time until a certain amount of the bubbles have collapsed, may also be of importance.

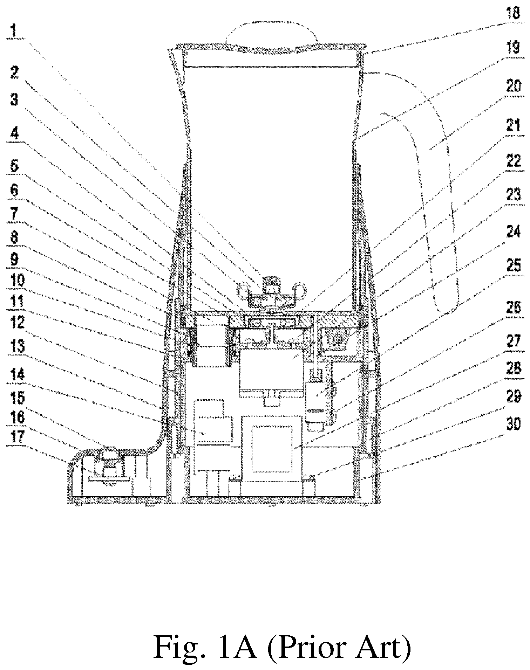

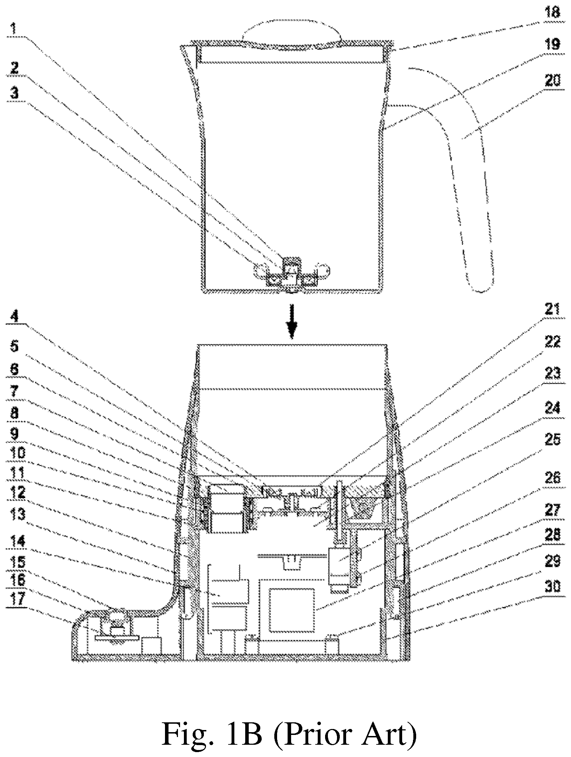

A first kind of frothing device has a stirrer mounted at the bottom of a cup to stir liquids loaded into the cup. For example, WO2010/078753A1 discloses a cup which can heat, stir and froth liquid food. The cup is illustrated in FIGS. 1A and IB. The cup includes a container 19 and a motor-driven stirrer 1, wherein the stirrer 1 is inside the container 19 to stir liquid. The stirrer 1 is placed at the bottom of the container 19. The rotation of stirrer 1 is operated by a motor 23 under the container 19. When the motor 23 rotates, the motor drives a magnet 4 under the container. The stirrer 1 has a magnet 3. The magnet 4 drives the magnet 3 and the stirrer 1 can rotate. The container 19 is detachable. A heating element 6 is not fixed together with the container but fixed with the bottom parts of the cup. A stirring shaft 2 is riveted to the bottom of the container 19. The stirrer 1 with the magnet 3 is set inside into the stirring shaft 2. It has the disadvantage that the stirring shaft 2 is difficult to clean while cleaning the container 19.

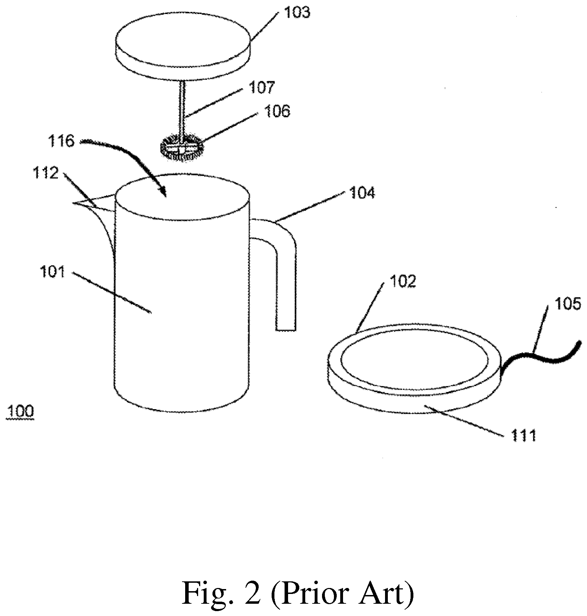

A second kind of frothing device has a stirrer connected with a lid of a container through a shaft. For example, NL2004870C discloses a magnetically-driven device adapted to froth milk or other milk-based liquids. The device is illustrated in FIG. 2. The device 100 comprises a main body 101, a base unit 102, and a lid 103. The base unit 102 is in the form of a circular base plate. The lid 103 comprises an agitation element 106 that is rotatably connected to the lid 103 via a shaft 107. The agitation element 106 is driven or rotated by a magnetic drive mechanism located in the main body 101 or in the base unit 102. It has the disadvantage that the agitation element 106 has to be cleaned together with the lid 103.

CN202234930 discloses a liquid food stirring and foaming machine which comprising a cup body, a stirrer, a support and a machine body. The cup body comprises an accommodating cavity for accommodating a liquid food and a cup lid. The stirrer comprises a stirring element; the stirring element is arranged on the support, and the support is detachably arranged in the accommodating cavity or connected on the cup lid. The machine body comprises a driving device, and the driving device is used for driving the stirring element to rotate so as to foam the liquid food.

There is a need, therefore, for an improved milk frothing device which is easy for clean. In particular, there is a need for a milk frothing device configured for enhancing the effect of agitation.

### SUMMARY OF THE INVENTION

The present invention provides a novel milk frothing device designed to respond to these needs.

In accordance with the invention, a milk frothing device is provided, comprising: a lid assembly; a stirrer assembly comprising a stirrer handle, a cantilever, a baffle frame, and a stirrer; and a cup body assembly comprising a cup, a cup bushing which surrounds the cup, a driving magnet which is opposite to a stirrer magnet of the stirrer and a driving motor which drives the driving magnet; wherein the stirrer handle being connected to the baffle frame by the cantilever; the stirrer handle being positioned on the cup bushing; the stirrer comprising a stirrer magnet to be driven by the driving magnet of the cup body assembly; the stirrer assembly being positioned automatically by the magnetic effect between the stirrer magnet and the driving magnet.

Preferably, the stirrer handle and the cantilever are integrated with the baffle frame. According to the invention the lid assembly comprises a lid and a lid magnet arranged in the inner surface of the lid; after use, the lid assembly is placed with the inner surface up, and is fit for the stirrer assembly which is also magnetic to be placed on, the lid magnet and the stirrer assembly will be attracted together due to the magnetic force. Preferably, the inner surface of the lid has the shape of arc with the center part thinner. Preferably, the lid magnet is arranged in the center of the inner surface of the lid. Preferably, the lid magnet is arranged in the center of the inner surface of the lid. Preferably, the stirrer assembly further comprises a positioning column arranged in an end of the baffle frame; the stirrer surrounding the positioning column, and the positioning column having a positioning column notch on the bottom surface of the positioning column.

Preferably, the stirrer further comprises a stirrer spring formed radially outwardly of the stirrer magnet.

Preferably, the stirrer spring can be separated from the stirrer.

Preferably, the number of coils of the stirrer spring can be selected based on different types of milk or on the needed proportion of froth.

Preferably, the stirrer handle has a handle magnet which is embedded in the stirrer handle and is not exposed, while the cup bushing comprises a cup bushing magnet arranged in the cup bushing, therefore on the upper side, the stirrer assembly is positioned by the attraction between the cup bushing magnet and the handle magnet.

Preferably, the positioning column has a positioning column notch on the bottom surface of the positioning column, while the cup has a salient on the center of the lower surface of the cup, the salient fitting with the positioning column notch, therefore on the lower side, the stirrer assembly is positioned auxiliarily by the positioning column notch and the salient.

Preferably, the driving magnet and the stirrer magnet can be at least one pair.

Preferably, the cantilever and the baffle frame can be at least one.

Preferably, the cantilevers and the baffle frames are more than one and they are distributed symmetrically.

Preferably, the baffle frame can be arranged at the cup.

Preferably, the cup body assembly further comprises a heating plate which is arranged under the cup to heat the liquid in the cup.

Preferably, the heating plate is arranged radially outwardly of the driving magnet.

Preferably, the cup body assembly further comprises a control circuit board.

Preferably, the control circuit board can drive the driving motor to start gradually from low speed to high speed until the rated voltage.

Preferably, the control circuit board controls the operation of both the driving motor and the heating plate to get beverages at different temperature. Preferably, the cup body assembly further comprises an upper power connector.

Preferably the milk frothing device further comprises a power supply base, while the power supply base comprises a lower power connector, the two connectors being connected each other to provide power.

Preferably, the upper power connector can perform 360 degrees of rotation relative to the lower power connector.

Preferably, the cup bushing has a notch at its upper end, while the stirrer handle of the stirrer assembly extends through the cup bushing notch and protrudes from the cup.

Preferably, the stirrer handle has a positioning salient which contacts with the cup bushing and help positioning the stirrer handle.

Preferably, the cup body assembly is detachable, and the cup is detachable from the heating plate of the cup body assembly.

Preferably, the cup body assembly further comprises a heat-insulating bracket which surrounds the cup therefore the cup will not fall down.

Preferably, the cup body assembly further comprises a heat-insulating seal ring.

Preferably, the cup body assembly has power cord and a plug to be connected to a socket to get power.

Preferably, the cup body assembly is non-detachable.

### BRIEF DESCRIPTION OF THE DRAWINGS

The foregoing and other advantages and features of the invention will become apparent upon reading the following detailed description and upon reference to the drawings, in which :
FIG. 1A is a section view of a milk frothing device according to the prior art;
FIG. IB is an exploded section view of a milk frothing device according to the prior art;
FIG. 2 is an exploded view of a milk frothing device according to the prior art;
Figs 3-18 do not fall under the scope of the present invention and represent background art useful for understanding the present invention; FIG. 3 is a bottom view of a milk frothing device;
FIG. 4 is a right side view of the milk frothing device;
FIG. 5 is a front view of the milk frothing device;
FIG. 6 is a left side view of the milk frothing device;
FIG. 7 is a back view of the milk frothing device;
FIG. 8 is a top view of the milk frothing device;
FIG. 9 is an exploded view of the milk frothing device;
FIG. 10 is a solid view of the milk frothing device;
FIG. 11 is an exploded view of the milk frothing device;
FIG. 12 is a solid view of the milk frothing device without the lid assembly;
FIG. 13 is a solid view of the milk frothing device;
FIG. 14 is a section view of the milk frothing device;
FIG. 15 is a section view of the lid assembly and the stirrer assembly;
FIG. 16 is a solid view of the lid assembly and the stirrer assembly;
FIG. 17 is a solid view of the stirrer assembly;
FIG. 18 is a solid view of the stirrer assembly with the stirrer spring separately from the stirrer magnet;
FIG. 19 is a bottom view of a milk frothing device according a first embodiment of the present invention; FIG. 20 is a right side view of the milk frothing device according to the first embodiment of the present invention;
FIG. 21 is a front view of the milk frothing device according to the first embodiment of the present invention;
FIG. 22 is a left side view of the milk frothing device according to the first embodiment of the present invention;
FIG. 23 is a back view of the milk frothing device according to the first embodiment of the present invention;
FIG. 24 is a top view of the milk frothing device according to the first embodiment of the present invention;
FIG. 25 is an exploded view of the milk frothing device according to the first embodiment of the present invention;
FIG. 26 is a solid view of the milk frothing device according to the first embodiment of the present invention;
FIG. 27 is a solid view of the milk frothing device according to the first embodiment of the present invention;
FIG. 28 is a solid view of the milk frothing device without the lid assembly according to the first embodiment of the present invention;
FIG. 29 is an exploded view of the milk frothing device according to the first embodiment of the present invention;
FIG. 30 is a section view of the milk frothing device according to the first embodiment of the present invention;
FIG. 31 is a solid view of the stirrer assembly according to the first embodiment of the present invention; FIG. 32 is a solid view of the stirrer assembly with the stirrer spring being separate from the stirrer magnet according to the first embodiment of the present invention;
FIG. 33 is a section view of the lid assembly and the stirrer assembly according to the first embodiment of the present invention;
FIG. 34 is a solid view of the lid assembly and the stirrer assembly according to the first embodiment of the present invention;
FIG. 35 is a bottom view of a milk frothing device according to the second embodiment of the present invention;
FIG. 36 is a right side view of the milk frothing device according to the second embodiment of the present invention;
FIG. 37 is a front view of the milk frothing device according to the second embodiment of the present invention;
FIG. 38 is a left side view of the milk frothing device according to the second embodiment of the present invention;
FIG. 39 is a back view of the milk frothing device according to the second embodiment of the present invention;
FIG. 40 is a top view of the milk frothing device according to the second embodiment of the present invention;
FIG. 41 is a solid view of the milk frothing device according to the second embodiment of the present invention;
FIG. 42 is a solid view of the milk frothing device without the lid assembly according to the second embodiment of the present invention;
FIG. 43 is an exploded view of the milk frothing device according to the second embodiment of the present invention;
FIG. 44 is an exploded view of the milk frothing device according to the second embodiment of the present invention;
FIG. 45 is a section view of the milk frothing device according to the second embodiment of the present invention;
FIG. 46 is a solid view of the stirrer assembly according to the second embodiment of the present invention;
FIG. 47 is a solid view of the stirrer assembly with the stirrer spring being separate from the stirrer magnet according to the second embodiment of the present invention;
FIG. 48 is a section view of the lid assembly and the stirrer assembly according to the second embodiment of the present invention;
FIG. 49 is a solid view of the lid assembly and the stirrer assembly according to the second embodiment of the present invention.

### DETAILED DESCRIPTION OF SPECIFIC EMBODIMENTS

Hereinafter, embodiments of a milk frothing device according to the present invention will be described with reference to the accompanying drawing. Two embodiments of the present invention may be described.

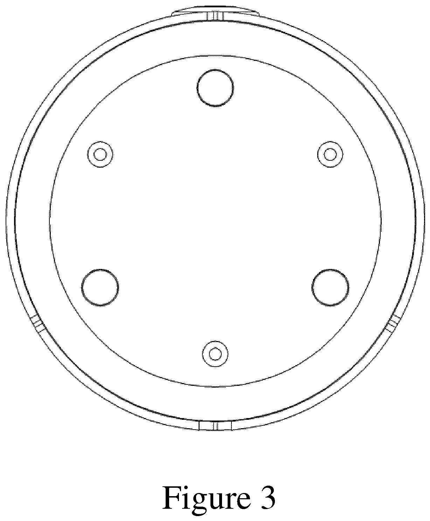

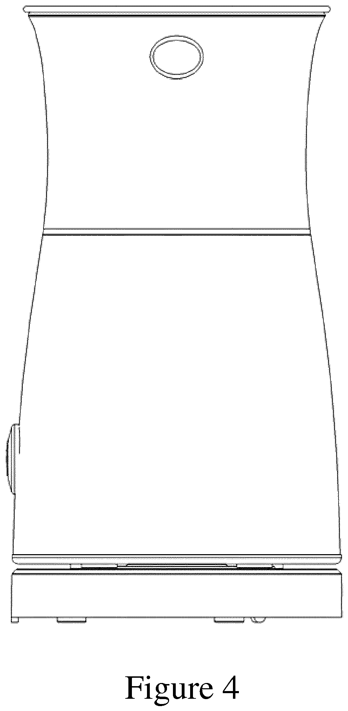

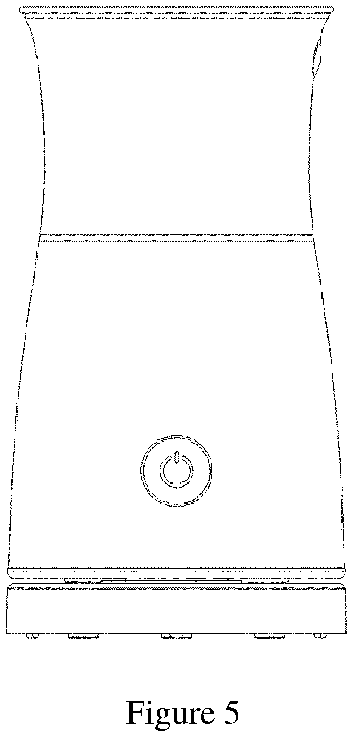

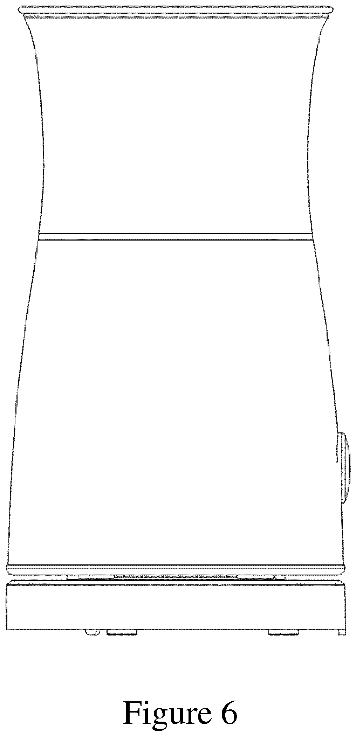

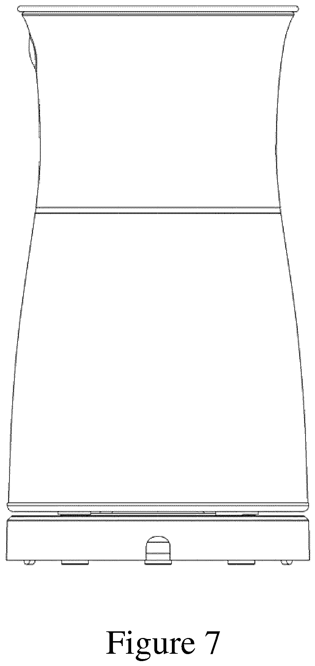

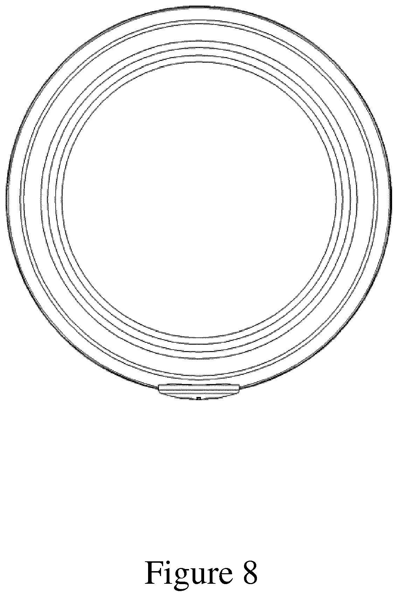

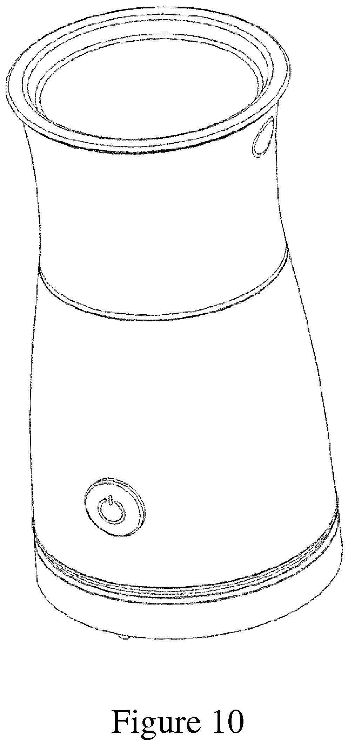

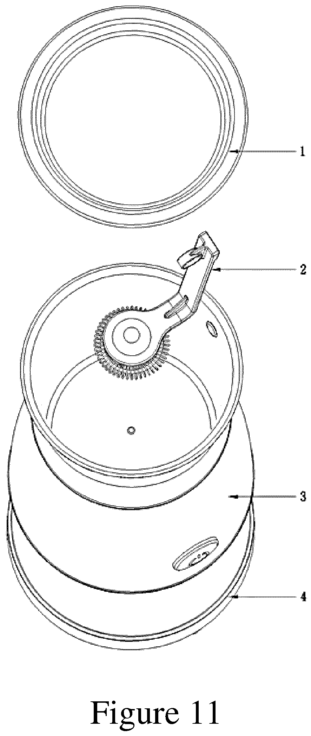

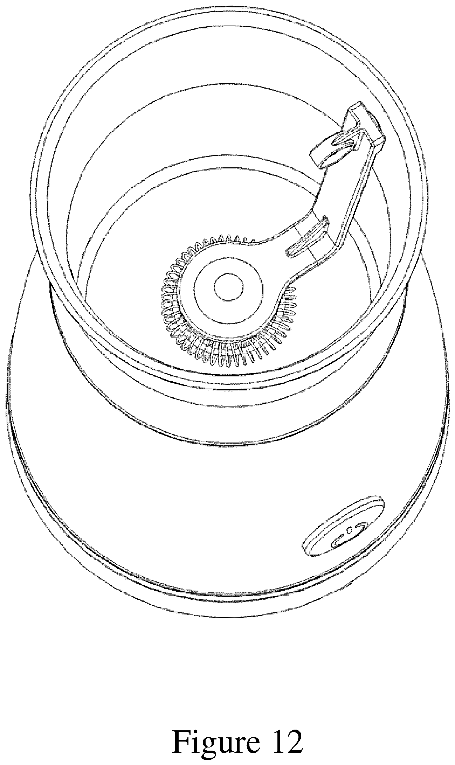

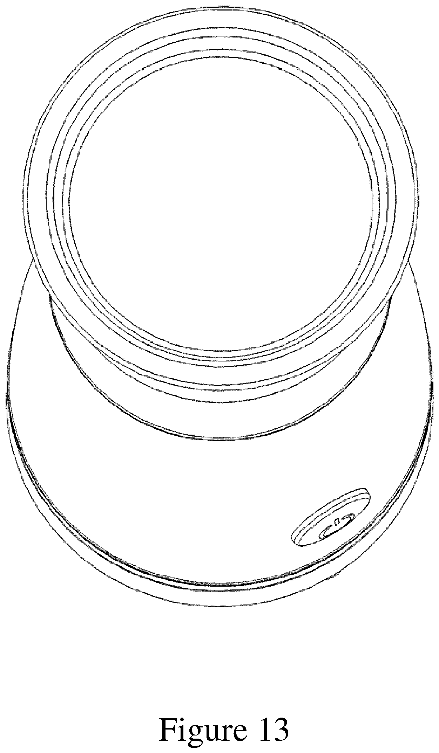

Figs 3-18, do not fall under the scope of the present invention and represent the background art useful for understanding the present invention.

### [First Example]

Turning now to the drawings, and referring first to FIGS. 3 to 13, a milk frothing device is illustrated as including a lid assembly 1, a stirrer assembly 2, a cup body assembly 3, and a power supply base 4. According to the first example, the milk frothing device is non-detachable. That means the cup and the motor cannot be detached.

### [Lid Assembly]

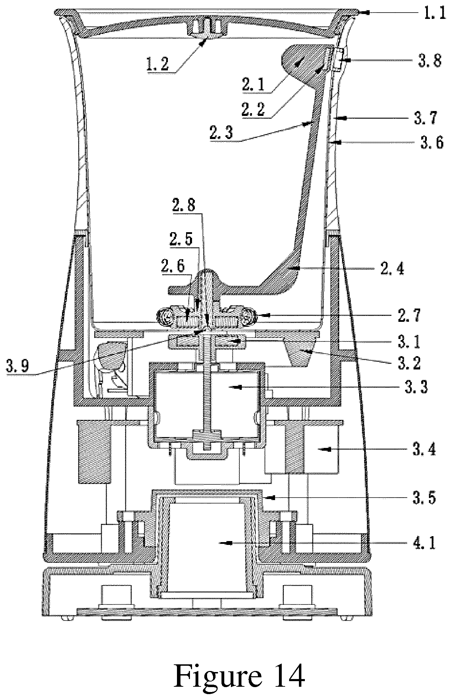

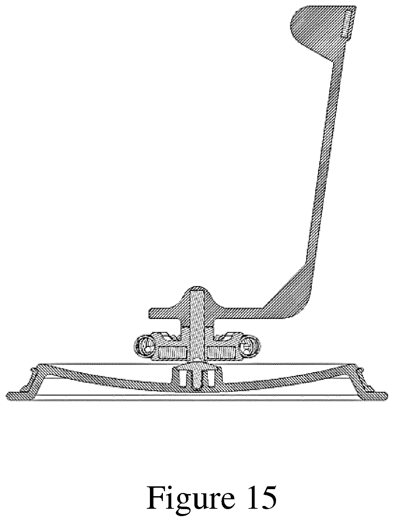

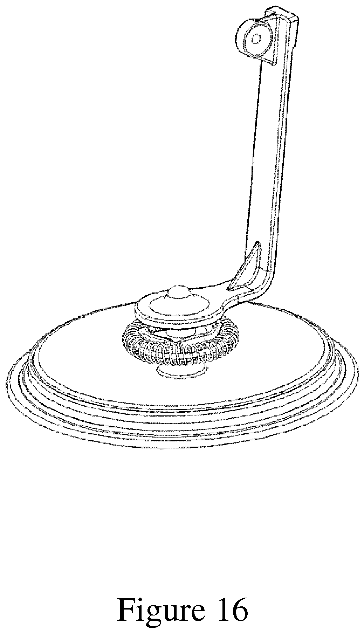

As shown in FIG. 14, the lid assembly 1 comprises a lid 1.1 and a lid magnet 1.2 arranged in the inner surface of the lid 1.1. The inner surface of the lid 1.1 has the shape of arc with the center part thinner. The lid magnet 1.2 is arranged in the center of the inner surface of the lid 1.1 and is fixed to the lid 1.1. As shown in FIGS. 15 and 16, after use, the lid assembly 1 is placed with the inner surface up, and is fit for the stirrer assembly 2 which is also magnetic to be placed on. The lid magnet 1.2 and the stirrer assembly 2 will be attracted together due to the magnet force. Then the stirrer assembly 2 could be fixed on the lid assembly 1 and will not fall down. This arrangement makes the milk frothing device more convenient and healthier.

### [Stirrer Assembly]

As shown in FIG. 14, the stirrer assembly 2 comprises a stirrer handle 2.1, a cantilever 2.3, a baffle frame 2.4, a stirrer 2.5 and a positioning column. The stirrer handle 2.1 is connected to the baffle frame 2.4 by the cantilever 2.3. The stirrer handle 2.1 and the cantilever 2.3 are integrated with the baffle frame 2.4. The positioning column is arranged in an end of the baffle frame 2.4. The stirrer 2.5 surrounds the positioning column. The positioning column has a positioning column notch 2.8 on the bottom surface of the positioning column.

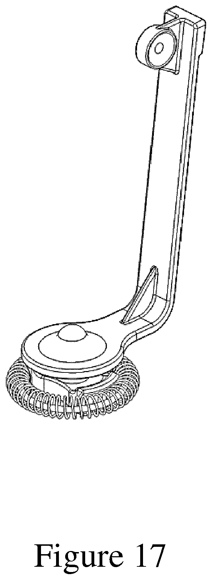

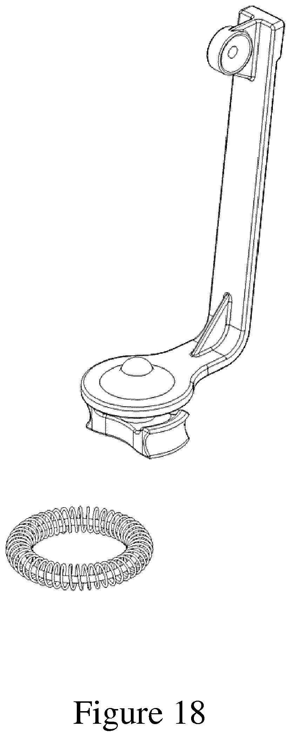

As shown in FIGS. 17 and 18, the stirrer 2.5 comprises a stirrer magnet 2.6 and a stirrer spring 2.7 formed radially outwardly of the stirrer magnet 2.6. The stirrer spring 2.7 can be separated from the stirrer 2.5. When the stirrer 2.5 stirs without the stirrer spring 2.7, no froth will be produced. It serves as only a stirrer. When the stirrer 2.5 stirs with the stirrer spring 2.7, it will produce froth. The number of coils of the stirrer spring 2.7 can be selected based on different types of milk or on the needed proportion of froth. Compared with other milk frothing devices which use two kinds of stirrer, the milk frothing device of the present example is more convenient. As shown in FIG. 14, the stirrer handle 2.1 has a handle magnet 2.2 which is embedded in the stirrer handle 2.1 and is not exposed. The positioning column has a positioning column notch 2.8 on the bottom surface of the positioning column. On the upper side, the stirrer assembly 2 is positioned with a cup bushing magnet 3.8 (will be described later) by the handle magnet 2.2 arranged at the stirrer handle 2.1. On the lower side, the stirrer assembly is positioned automatically by the magnetic effect between the stirrer magnet 2.6 and a driving magnet 3.1 (will be described later), and positioned auxiliarily by the positioning column notch 2.8 and a salient 3.9 of a cup (will be described later) . To be alternative, the lid magnet 1.2 can be replaced by a lid magnet 1.2.

The stirring/rotation of the stirrer assembly 2 is operated by the magnetic effect between the stirrer magnet 2.6 and the driving magnet 3.1 in the cup body assembly 3. There is no need for the cup to be perforated. Therefore, the cup is easy to clean and can be not waterproof. The driving magnet 3.1 and the stirrer magnet 2.6 can be at least one pair . The cantilever 2.3 and the baffle frame 2.4 of the stirrer assembly 2 can changed the direction of the milk under stirring and produce more froth. The turbulence flow is increased. The cantilever 2.3 and the baffle frame 2.4 can be at least one. When the cantilevers 2.3 and the baffle frames 2.4 are more than one, it is preferred that they are distributed symmetrically. To be alternative, the baffle frame 2.4 can be arranged at the cup.

Due to the assembling mode of the stirring assembly 2 and the attached stirrer handle 2.1, the stirrer assembly is easier to be taken out compared with other milk frothing device. The stirring assembly 2 is dishwasher cleanable.

### [Cup Body Assembly]

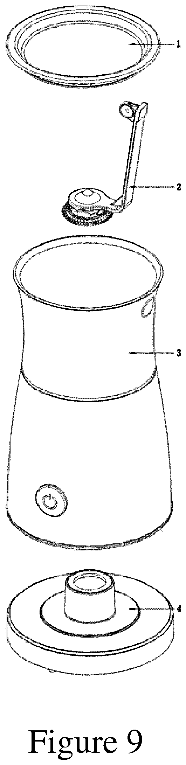

As shown in FIGS. 9 and 14, the cup body assembly 3 comprises a driving magnet 3.1, a heating plate 3.2, a driving motor 3.3, a control circuit board 3.4, an upper power connector 3.5, a cup 3.6, and a cup bushing 3.7.

The cup bushing 3.7 surrounds the cup 3.6 to prevent scalding. The cup bushing 3.7 comprises a cup bushing magnet 3.8 arranged in the cup bushing 3.7. The cup bushing magnet 3.8 will attract the handle magnet 2.2 to position the stirrer assembly 2.

The cup 3.6 has a salient 3.9 on the center of the lower surface of the cup 3.6. The salient 3.9 fits with the positioning column notch 2.8 and helps the stirrer assembly 2 to position.

The heating plate 3.2 is under the cup 3.6 to heat the liquid in the cup. The heating plate 3.2 is arranged radially outwardly of the driving magnet 3.1. The driving magnet 3.1 is opposite to the stirring magnet 2.6 described above. The driving magnet 3.1 is attached on the shaft of the driving motor 3.3. The driving motor 3.3 is under the driving magnet 3.1 and drives the driving magnet 3.1 to rotate.

The control circuit board 3.4 can drive the driving motor 3.3 to start gradually from low speed to high speed until the rated voltage, which makes the rotating of the driving magnet 3.1 easier, and makes the magnetic driving easier.

The control circuit board 3.4 controls the operation of both the driving motor 3.3 and the heating plate 3.2 to get beverages at different temperature. It can be controlled that the driving motor 3.3 can still work after the heating plate 3.2 works. Therefore the milk will not char. Frothing different types of milk need different stirring speed. By controlling the control circuit board 3.4, different voltage is load on the driving motor 3.3 to get different rotating speed.

The upper power connector 3.5 can perform 360 degrees of rotation relative to a lower power connector 4.1 (will be described later). Therefore it is convenient.

### [Power Supply Base]

As shown in FIGS. 9 and 14, the power supply base 4 comprises a lower power connector 4.1. The lower power connector 4.1 connects with the upper power connector 3.5 and can perform 360 degrees of rotation relative to the upper power connector 3.5. Both the assembling and disassembling of the cup assembly 3 with the power supply base 4 are easy and convenient.

### [First Embodiment]

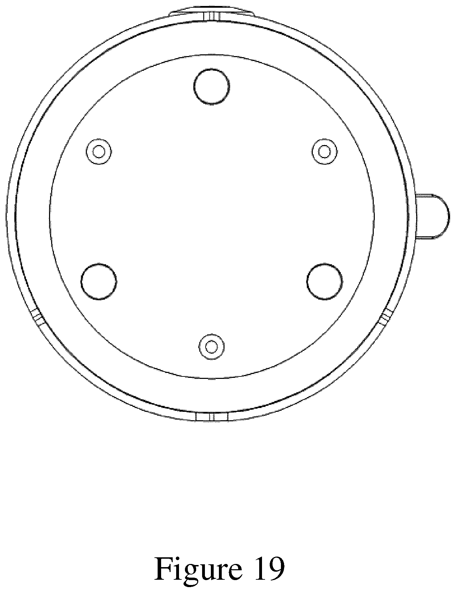

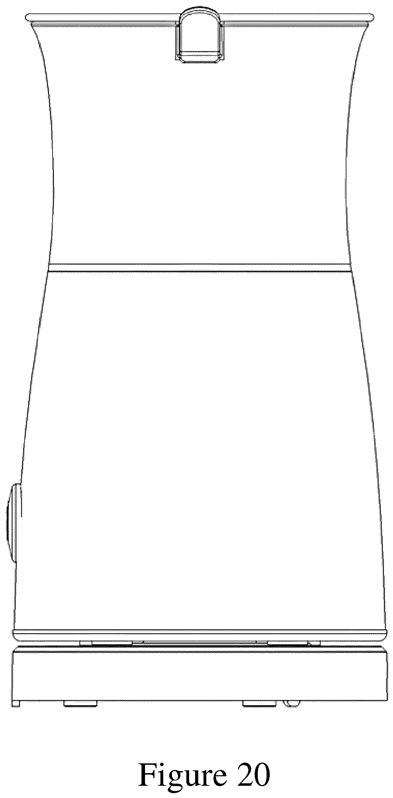

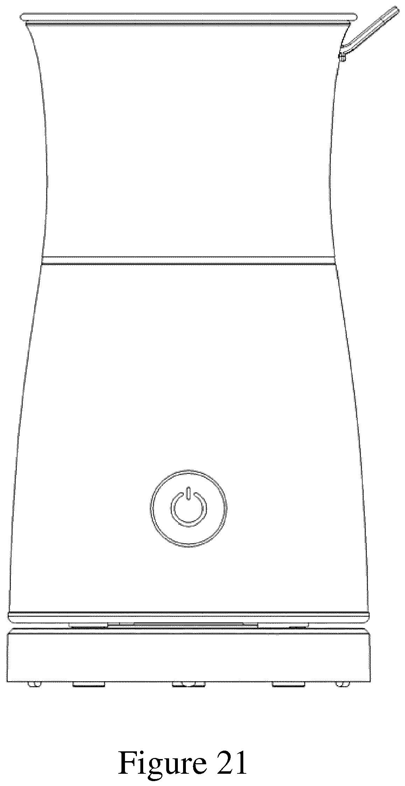

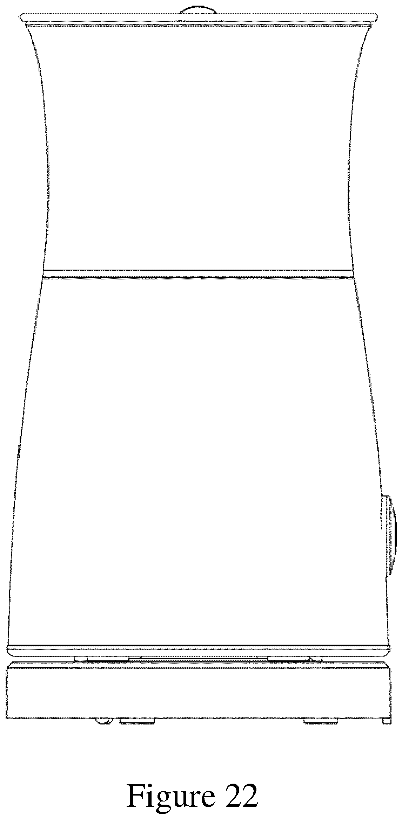

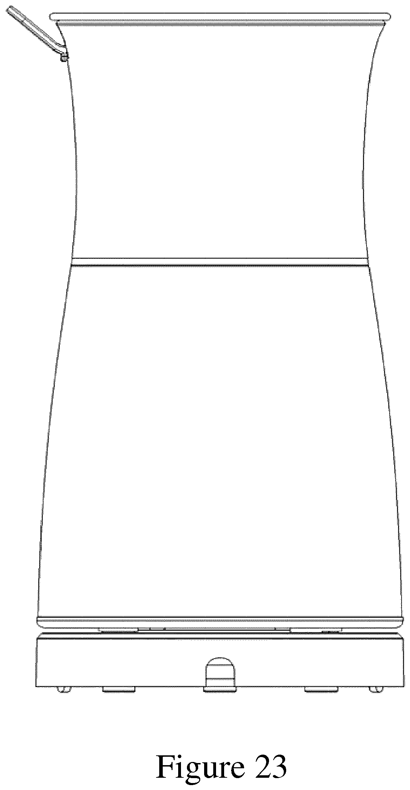

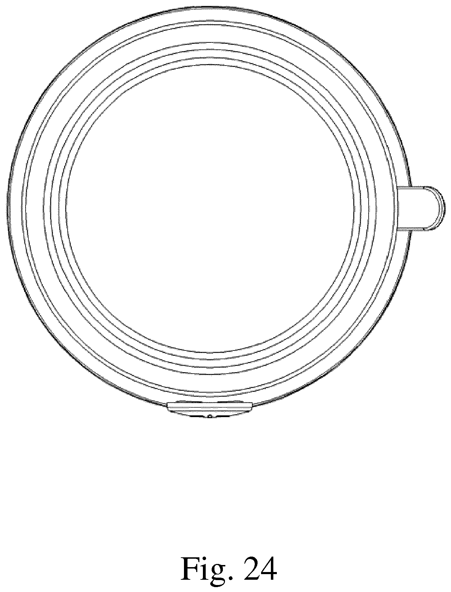

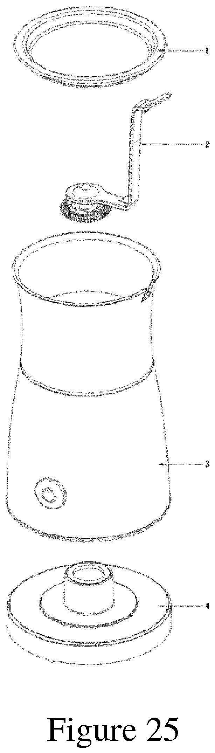

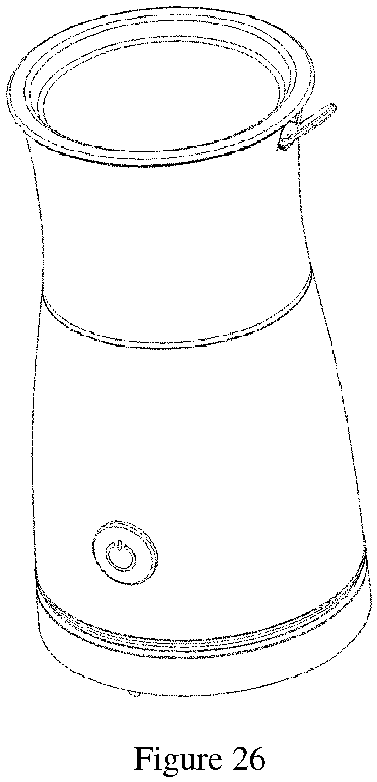

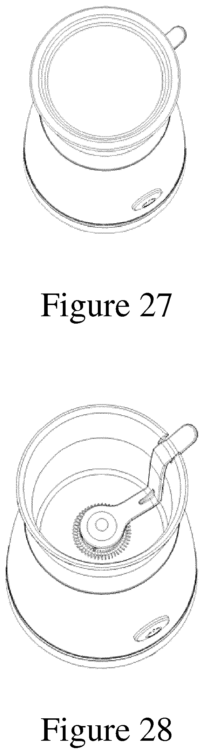

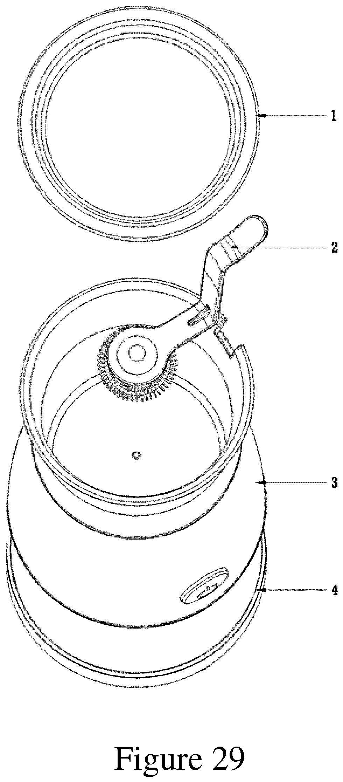

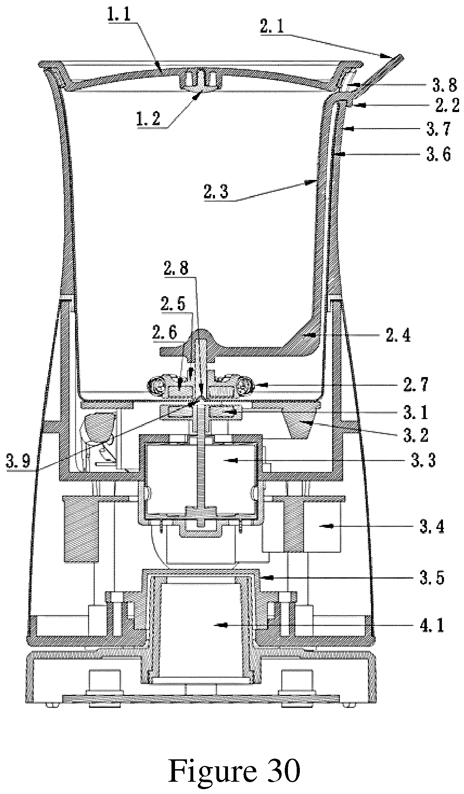

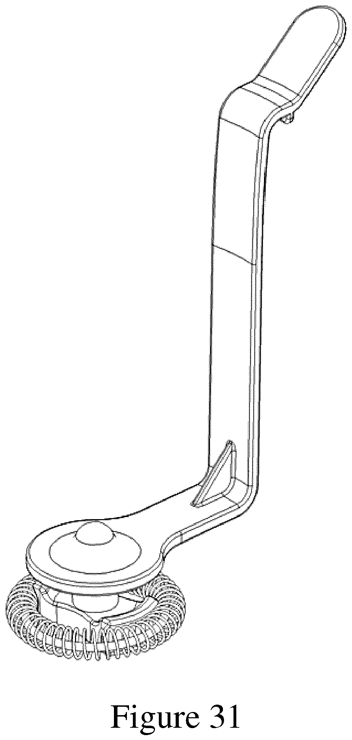

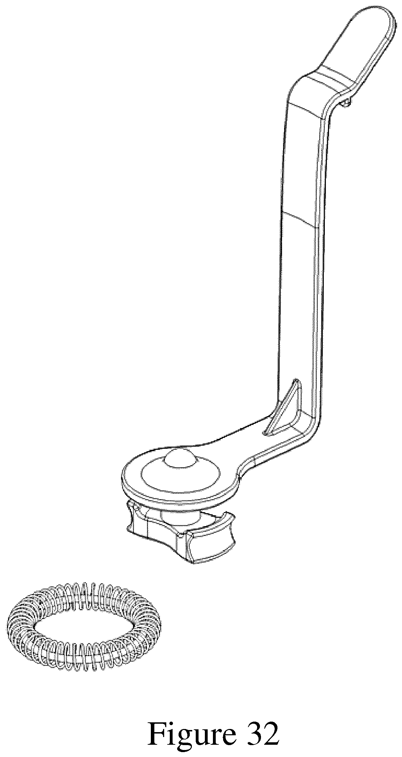

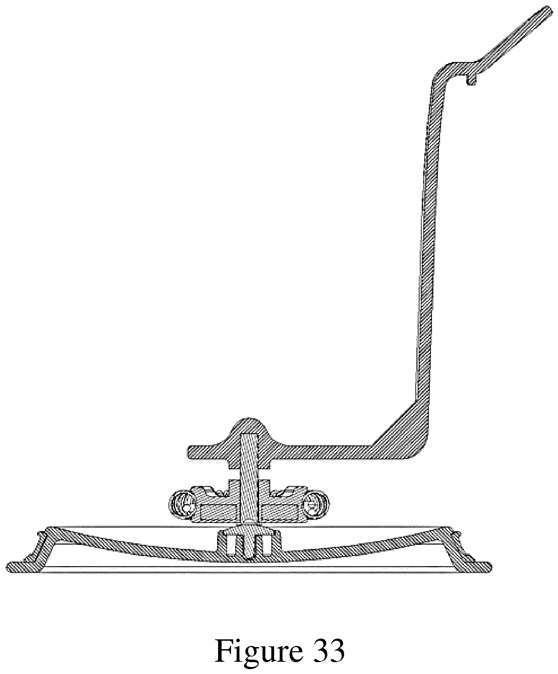

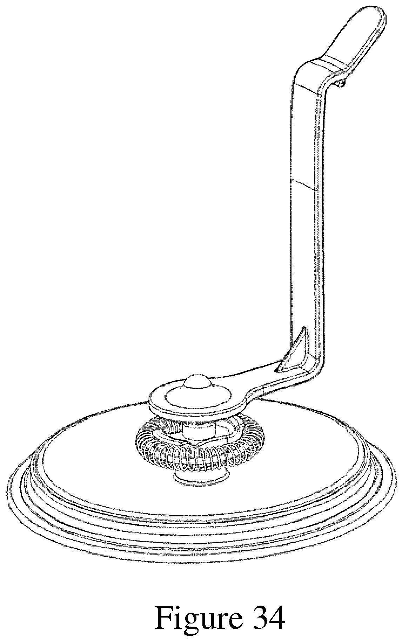

The first embodiment of the present invention will be described with reference to FIGS. 19-34. As shown in FIGS. 30, a milk frothing device of the first embodiment of the present invention also includes a lid assembly 1, a stirrer assembly 2, a cup body assembly 3, and a power supply base 4. The difference between the first example and the first embodiment is that the positioning way of the upper side of the stirrer assembly 2. There is no cup bushing magnet 3.8 or handle magnet 2.2 in the first embodiment. In the first embodiment, the cup bushing 3.7 has a notch 3.8 at its upper end. The stirrer handle 2.1 of the stirrer assembly 2 extends through the cup bushing notch 3.8 and protrudes from the cup 3.6. The stirrer handle 2.1 has a positioning salient 2.2 which contacts with the cup bushing 3.7 and help positioning the stirrer handle 2.1.

According to the first embodiment, the milk frothing device is also non-detachable.

### [Second Embodiment]

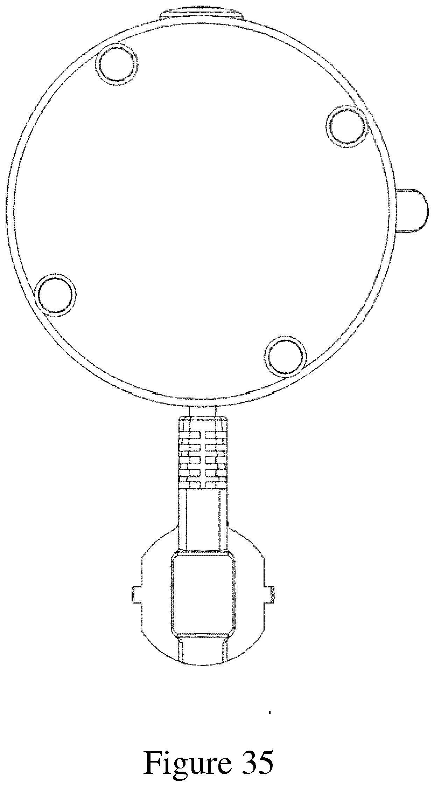

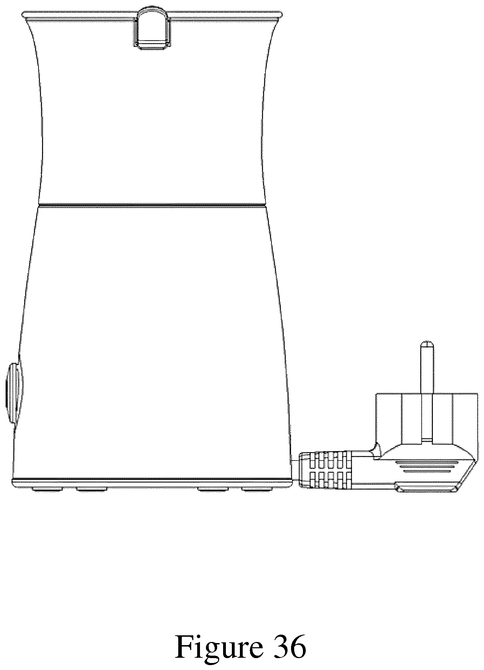

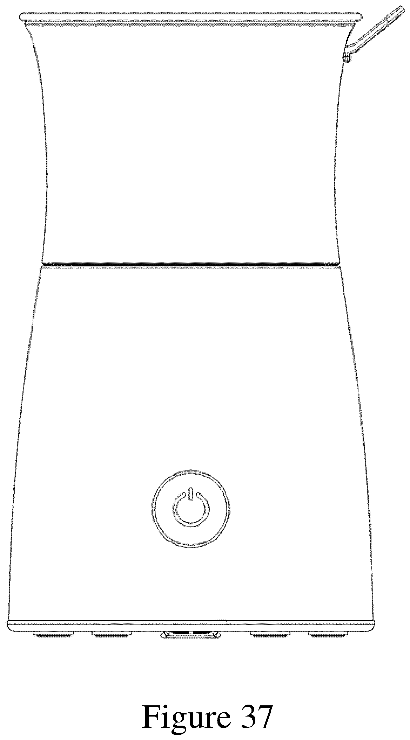

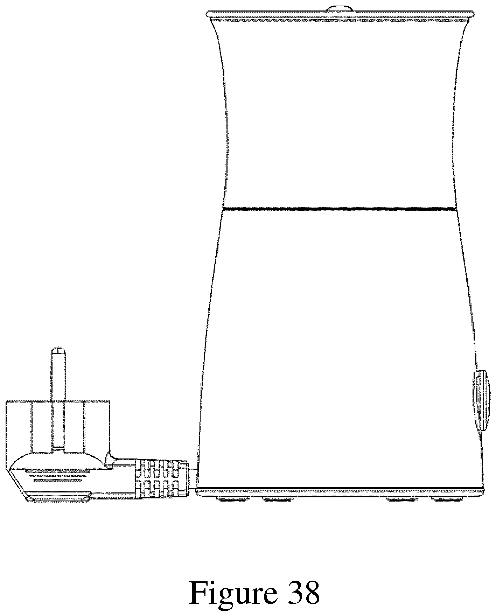

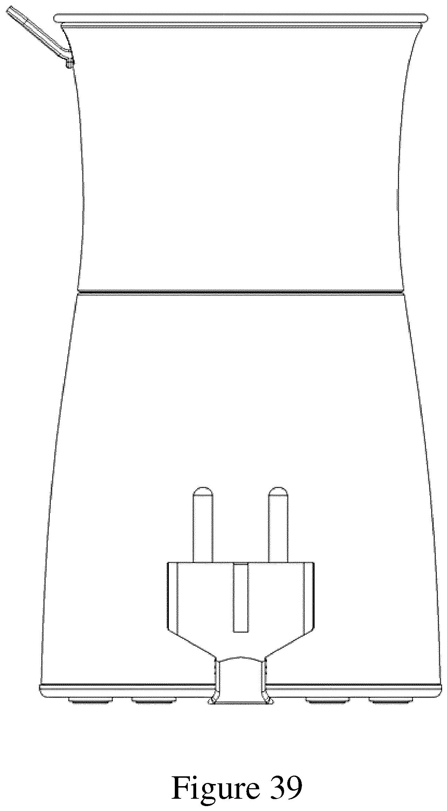

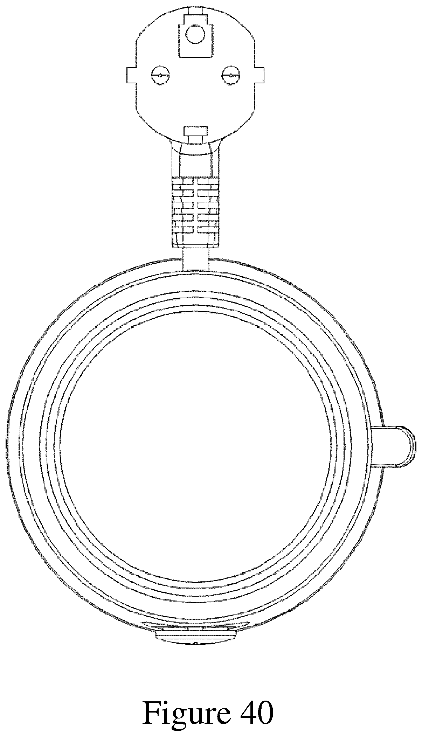

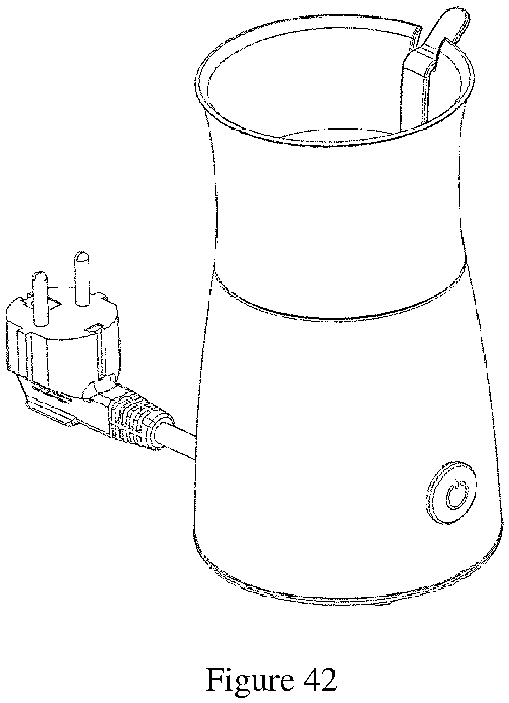

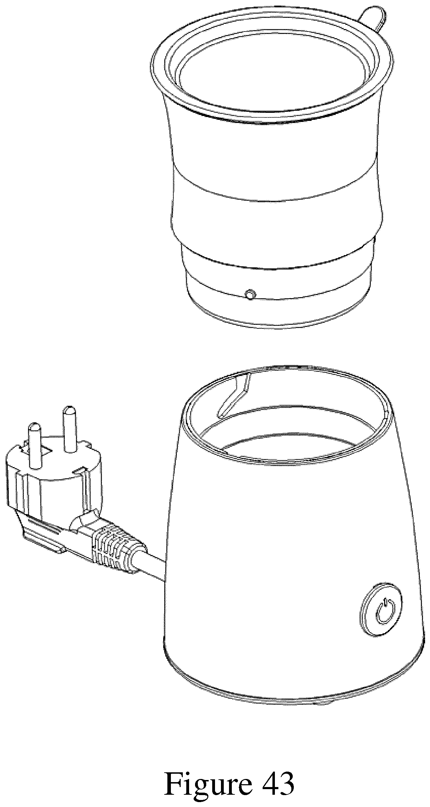

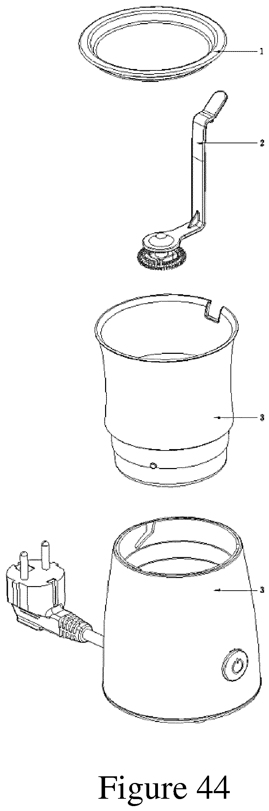

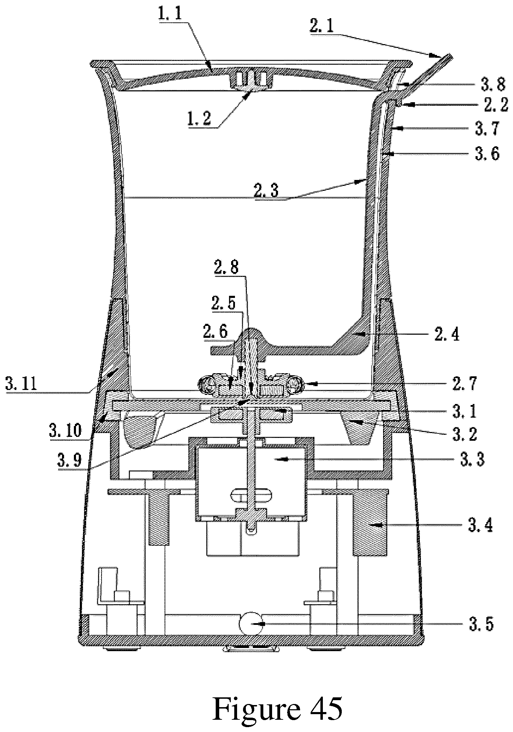

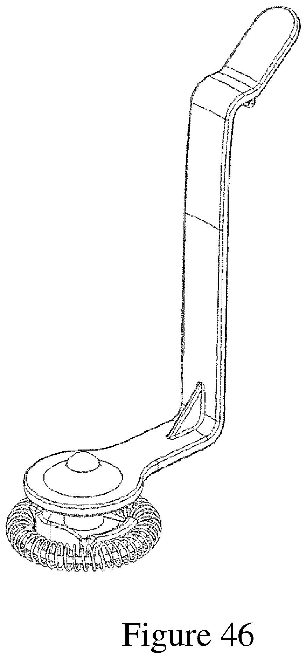

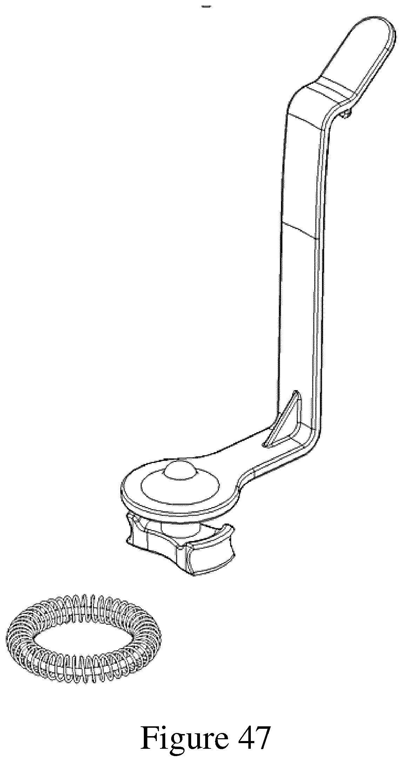

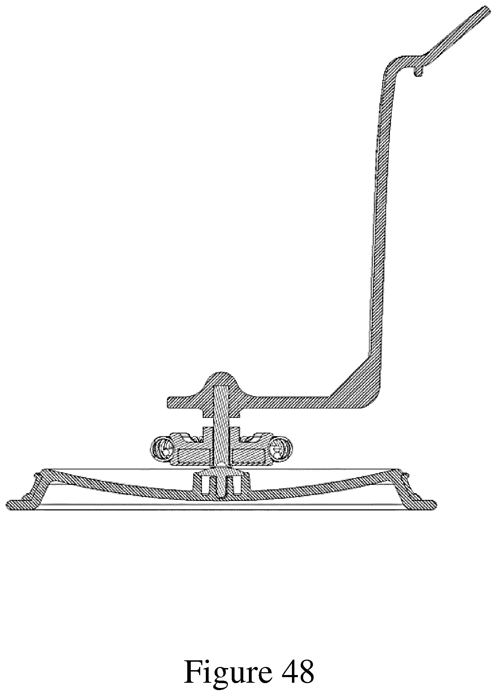

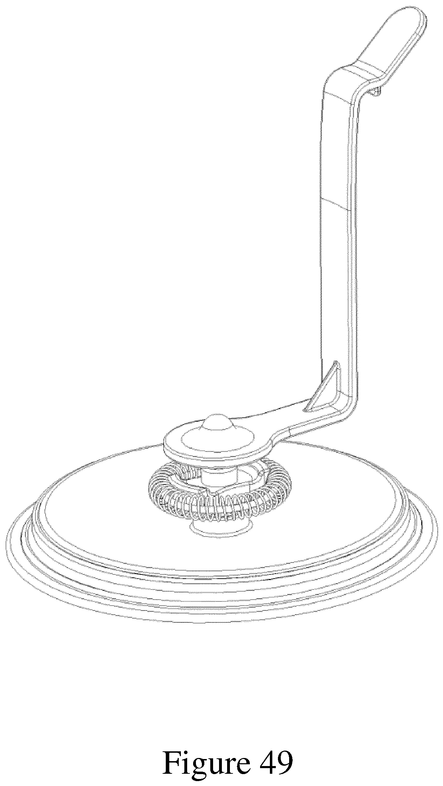

The second embodiment of the present invention will be described with reference to FIGS. 35-49. A milk frothing device of the second embodiment of the present invention includes a lid assembly 1, a stirrer assembly 2, and a cup body assembly 3. The main difference between the first example and the second embodiment is that the cup body assembly 3 is detachable. That means the cup and the motor can be detached. Therefore the cup can be washed separately.

In the second embodiment, the cup 3.6 is detachable from the heating plate 3.2 of the cup body assembly 3. The cup 3.6 can be used separately and is easy to clean and wash as there is no electrical element. The cup body assembly 3 further comprises a heat-insulating bracket 3.11 which surrounds the cup 3.6 therefore the cup 3.6 will not fall down. The cup body assembly 3 further comprises a heat-insulating seal ring 3.10. There is no power supply base 4 as in the first and second embodiment. The cup body assembly 3 has power cord and a plug to be connected to a socket to get power.

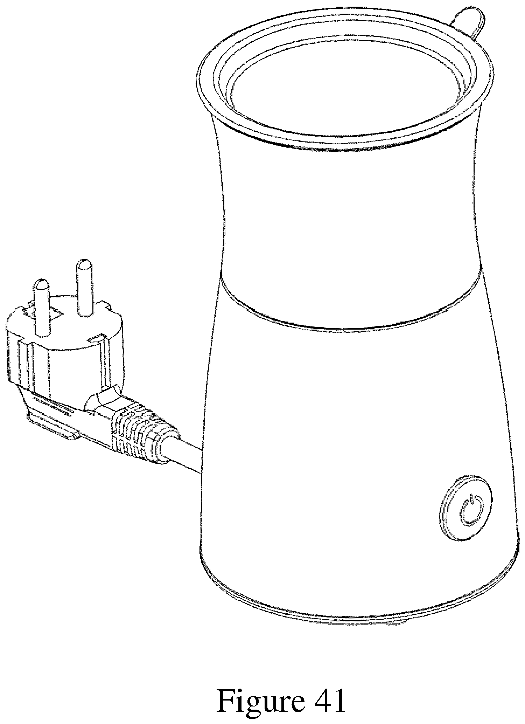

The positioning way of the upper side of the stirrer assembly 2 is magnetic positioning (as described in the first example) or notch-salient positioning (as shown in FIGS. 41-44 and 45, and the same as described in the first embodiment). Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A milk frothing device, comprising:
a. a lid assembly (1);
b. a stirrer assembly (2) comprising a stirrer handle (2.1), a cantilever (2.3), a baffle frame (2.4), and a stirrer (2.5); and
c. a cup body assembly (3) comprising a cup (3.6), a cup bushing (3.7) which surrounds the cup (3.6), a driving magnet (3.1) which is opposite to a stirrer magnet (2.6) of the stirrer (2.5) and a driving motor (3.3) which drives the driving magnet (3.1);
the stirrer handle (2.1) being connected to the baffle frame (2.4) by the cantilever (2.3); the stirrer (2.5) comprising a stirrer magnet (2.6) to be driven by the driving magnet (3.1) of the cup body assembly (3); the stirrer assembly (2) being positioned automatically by the magnetic effect between the stirrer magnet (2.6) and the driving magnet (3.1);
the lid assembly (1) comprises a lid (1.1) and a lid magnet (1.2) arranged in the inner surface of the lid (1.1); after use, the lid assembly (1) being placed with the inner surface up, and being fit for the stirrer assembly (2) which is also magnetic to be placed on, the lid magnet (1.2) and the stirrer assembly (2) being attracted together due to the magnetic force;
**characterized in that**
the stirrer handle (2.1) is positioned on the cup bushing (3.7).

2. The milk frothing device of claim 1, wherein the inner surface of the lid (1.1) has the shape of arc with the center part thinner.

3. The milk frothing device of claim 1, wherein the lid magnet (1.2) is arranged in the center of the inner surface of the lid (1.1).

4. The milk frothing device of claim 1, wherein the stirrer further comprises a stirrer spring formed radially outwardly of the stirrer magnet and wherein the stirrer spring (2.7) can be separated from the stirrer (2.5).

5. The milk frothing device of claim 4, wherein the number of coils of the stirrer spring (2.7) can be selected based on different types of milk or on the needed proportion of froth.

6. The milk frothing device of claim 1, wherein the stirrer assembly (2) further comprises a positioning column arranged in an end of the baffle frame (2.4); the stirrer surrounding the positioning column, and the positioning column having a positioning column notch (2.8) on the bottom surface of the positioning column, while the cup (3.6) has a salient (3.9) on the center of the lower surface of the cup (3.6), the salient (3.9) fitting with the positioning column notch (2.8), therefore on the lower side, the stirrer assembly (2) being positioned auxiliarily by the positioning column notch (2.8) and the salient (3.9).

7. The milk frothing device of claim 1, wherein the cup body assembly (3) further comprises a heating plate (3.2) which is arranged under the cup to heat the liquid in the cup, wherein the heating plate (3.2) is arranged radially outwardly of the driving magnet (3.1).

8. The milk frothing device of claim 1, wherein the cup body assembly (3) further comprises a control circuit board (3.4), wherein the control circuit board (3.4) can drive the driving motor (3.3) to start gradually from low speed to high speed until the rated voltage.

9. The milk frothing device of claims 7 and 8, wherein the control circuit board (3.4) controls the operation of both the driving motor (3.3) and the heating plate (3.2) to get beverages at different temperature.

10. The milk frothing device of claim 1, wherein the cup body assembly (3) further comprises an upper power connector (3.5), wherein the milk frothing device further comprises a power supply base (4), while the power supply base (4) comprises a lower power connector (4.1), the two connectors (3.5; 4.1) being connected each other to provide power.

11. The milk frothing device of claim 10, wherein the upper power connector (3.5) can perform 360 degrees of rotation relative to the lower power connector (4.1).

12. The milk frothing device of claim 1, wherein the cup bushing (3.7) has a notch (3.8) at its upper end, while the stirrer handle (2.1) of the stirrer assembly extends through the cup bushing notch (3.8) and protrudes from the cup, wherein the stirrer handle (2.1) has a positioning salient (3.9) which contacts with the cup bushing (3.7) and help positioning the stirrer handle (2.1).

13. The milk frothing device of claim 1, wherein the cup body assembly (3) further comprises a heating plate (3.2) which is arranged under the cup to heat the liquid in the cup and wherein the cup body assembly (3) is detachable, and the cup (3.6) is detachable from the heating plate (3.2) of the cup body assembly (3).

## Patentansprüche

1. Milchaufschäumvorrichtung, umfassend:
a. eine Deckelanordnung (1);
b. eine Rühreranordnung (2), umfassend einen Rührerhandgriff (2.1), einen Ausleger (2.3), einen Dämpferrahmen (2.4) und einen Rührer (2.5); und
c. eine Becherkörperanordnung (3), umfassend einen Becher (3.6), eine Becherbuchse (3.7), die den Becher (3.6) umgibt, einen Antriebsmagneten (3.1), der einem Rührermagneten (2.6) des Rührers (2.5) gegenüberliegt, und einen Antriebsmotor (3.3), der den Antriebsmagneten (3.1) antreibt;
wobei der Rührerhandgriff (2.1) durch den Ausleger (2.3) mit dem Dämpferrahmen (2.4) verbunden ist; wobei der Rührer (2.5) einen Rührermagneten (2.6) zum Antrieb durch den Antriebsmagneten (3.1) der Becherkörperanordnung (3) umfasst; wobei die Rühreranordnung (2) durch den Magneteffekt zwischen dem Rührermagneten (2.6) und dem Antriebsmagneten (3.1) automatisch positioniert wird;
wobei die Deckelanordnung (1) einen Deckel (1.1) und einen in der Innenfläche des Deckels (1.1) angeordneten Deckelmagneten (1.2) umfasst; wobei die Deckelanordnung (1) nach Gebrauch mit der Innenfläche nach oben platziert wird und zum darauf Platzieren der Rühreranordnung (2), die ebenfalls magnetisch ist, bereit ist, wobei der Deckelmagnet (1.2) und die Rühreranordnung (2) aufgrund der Magnetkraft zueinander gezogen werden;
**dadurch gekennzeichnet, dass**
der Rührerhandgriff (2.1) auf der Becherbuchse (3.7) positioniert ist.

2. Milchaufschäumvorrichtung nach Anspruch 1, wobei die Innenfläche des Deckels (1.1) die Form eines Bogens aufweist, wobei dessen zentraler Teil dünner ist.

3. Milchaufschäumvorrichtung nach Anspruch 1, wobei der Deckelmagnet (1.2) im Zentrum der Innenfläche des Deckels (1.1) angeordnet ist.

4. Milchaufschäumvorrichtung nach Anspruch 1, wobei der Rührer weiter eine radial auswärts von dem Rührermagneten gebildete Rührerfeder umfasst und wobei die Rührerfeder (2.7) von dem Rührer (2.5) getrennt werden kann.

5. Milchaufschäumvorrichtung nach Anspruch 4, wobei die Anzahl von Windungen der Rührerfeder (2.7) auf Basis verschiedener Milcharten oder der benötigten Schaumproportion ausgewählt werden kann.

6. Milchaufschäumvorrichtung nach Anspruch 1, wobei die Rühreranordnung (2) weiter eine in einem Ende des Dämpferrahmens (2.4) angeordnete Positioniersäule umfasst, wobei der Rührer die Positioniersäule umgibt und die Positioniersäule eine Positioniersäulenausnehmung (2.8) an der Bodenfläche der Positioniersäule aufweist, während der Becher (3.6) eine Ausbuchtung (3.9) am Zentrum der Unterseite des Bechers (3.6) aufweist, welche Ausbuchtung (3.9) mit der Positioniersäulenausnehmung (2.8) zusammenpasst, wodurch, an der Unterseite, die Rühreranordnung (2) hilfsweise durch die Positioniersäulenausnehmung (2.8) und die Ausbuchtung (3.9) positioniert wird.

7. Milchaufschäumvorrichtung nach Anspruch 1, wobei die Becherkörperanordnung (3) weiter eine Heizplatte (3.2) umfasst, die unter dem Becher angeordnet ist, um die Flüssigkeit in dem Becher zu erhitzen, wobei die Heizplatte (3.2) radial auswärts von dem Antriebsmagneten (3.1) angeordnet ist.

8. Milchaufschäumvorrichtung nach Anspruch 1, wobei die Becherkörperanordnung (3) weiter eine Steuerplatine (3.4) umfasst, wobei die Steuerplatine (3.4) den Antriebsmotor (3.3) antreiben kann, sodass er allmählich von niedriger Geschwindigkeit zu hoher Geschwindigkeit bis zur Nennspannung anläuft.

9. Milchaufschäumvorrichtung nach Ansprüchen 7 und 8, wobei die Steuerplatine (3.4) den Betrieb sowohl des Antriebsmotors (3.3) als auch der Heizplatte (3.2) steuert, um Getränke auf verschiedenen Temperaturen zu erhalten.

10. Milchaufschäumvorrichtung nach Anspruch 1, wobei die Becherkörperanordnung (3) weiter einen oberen Stromanschluss (3.5) umfasst, wobei die Milchaufschäumvorrichtung weiter einen Zuleitungssockel (4) umfasst, während der Zuleitungssockel (4) einen unteren Stromanschluss (4.1) umfasst, wobei die zwei Anschlüsse (3.5; 4.1) miteinander verbunden sind, um Strom bereitzustellen.

11. Milchaufschäumvorrichtung nach Anspruch 10, wobei der obere Stromanschluss (3.5) in Bezug zu dem unteren Stromanschluss (4.1) eine Drehung von 360 Grad durchführen kann.

12. Milchaufschäumvorrichtung nach Anspruch 1, wobei die Becherbuchse (3.7) an ihrem oberen Ende eine Ausnehmung (3.8) aufweist, während der Rührerhandgriff (2.1) der Rühreranordnung sich durch die Becherbuchsenausnehmung (3.8) erstreckt und von dem Becher vorragt, wobei der Rührerhandgriff (2.1) eine Positionierausbuchtung (3.9) aufweist, die mit der Becherbuchse (3.7) in Kontakt kommt und hilft, den Rührerhandgriff (2.1) zu positionieren.

13. Milchaufschäumvorrichtung nach Anspruch 1, wobei die Becherkörperanordnung (3) weiter eine Heizplatte (3.2) umfasst, die unter dem Becher angeordnet ist, um die Flüssigkeit in dem Becher zu erhitzen, und wobei die Becherkörperanordnung (3) abnehmbar ist und der Becher (3.6) von der Heizplatte (3.2) der Becherkörperanordnung (3) abnehmbar ist.

## Revendications

1. Dispositif servant à faire mousser du lait, comprenant :
a. un assemblage (1) faisant office de couvercle ;
b. un assemblage (2) faisant office d'agitateur comprenant une poignée d'agitateur (2.1), une potence (2.3), un cadre de déflecteur (2.4) et un agitateur (2,5) ; et
c. un assemblage (3) faisant office de corps de récipient en forme de coupelle comprenant une coupelle (3.6), une douille de coupelle (3.7) qui entoure la coupelle (3.6), un aimant d'entraînement (3.1) qui est opposé à un aimant (2.6) de l'agitateur (2.5) et un moteur d'entraînement (3.3) qui entraîne l'aimant d'entraînement (3.1) ;
la poignée (2.1) de l'agitateur étant reliée au cadre de déflecteur (2.4) par la potence (2.3) ; l'agitateur (2.5) comprenant un aimant d'agitateur (2.6) destiné à être entraîné par l'aimant d'entraînement (3.1) de l'assemblage (3) faisant office de corps de récipient en forme de coupelle ; l'assemblage (2) faisant office d'agitateur venant se positionner de manière automatique sous l'influence de l'effet magnétique entre l'aimant (2.6) de l'agitateur et l'aimant d'entraînement (3.1) ; l'assemblage (1) faisant office de couvercle comprenant un couvercle (1.1) et un aimant de couvercle (1.2) disposé dans la surface interne du couvercle (1.1) ; après usage, l'assemblage (1) faisant office de couvercle venant se placer d'une manière telle que la surface supérieure est tournée vers le haut et est disponible pour l'assemblage (2) faisant office d'agitateur qui doit venir se placer par-dessus, également sous l'effet de la force magnétique ; l'aimant de couvercle (1.2) et l'assemblage (2) faisant office d'agitateur étant attirés l'un vers l'autre sous l'effet de la force magnétique ;
**caractérisé en ce que** la poignée d'agitateur (2.1) est disposée sur la douille de coupelle (3.7).

2. Dispositif servant à faire mousser du lait selon la revendication 1, dans lequel la surface interne du couvercle (1.1) possède une configuration en forme d'arc dont la partie centrale est plus mince.

3. Dispositif servant à faire mousser du lait selon la revendication 1, dans lequel l'aimant de couvercle (1.2) est disposé au centre de la surface interne du couvercle (1.1).

4. Dispositif servant à faire mousser du lait selon la revendication 1, dans lequel l'agitateur comprend en outre un ressort d'agitateur réalisé à l'extérieur de l'aimant d'agitateur en direction radiale, et dans lequel le ressort d'agitateur (2.7) peut être séparé de l'agitateur (2.5).

5. Dispositif servant à faire mousser du lait selon la revendication 4, dans lequel le nombre de lames du ressort d'agitateur (2.7) peut être choisi en se basant sur différents types de lait ou sur la proportion requise de mousse.

6. Dispositif servant à faire mousser du lait selon la revendication 1, dans lequel l'assemblage (2) faisant office d'agitateur comprend en outre une colonne de positionnement disposée dans une extrémité du cadre de déflecteur (2.4) ; l'agitateur entourant la colonne de positionnement et la colonne de positionnement possédant une encoche (2.8) de colonne de positionnement sur la surface inférieure de la colonne de positionnement, tandis que la coupelle (3.6) possède une saillie (3.9) au centre de la surface inférieure de la coupelle (3.6), la saillie (3.9) venant s'insérer au sein de l'encoche de colonne de positionnement (2.8), par conséquent sur le côté inférieur, l'assemblage (2) faisant office d'agitateur étant positionné à titre subsidiaire via l'encoche de colonne de positionnement (2.8) et la saillie (3.9).

7. Dispositif servant à faire mousser du lait selon la revendication 1, dans lequel l'assemblage (3) faisant office de corps de récipient en forme de coupelle comprend en outre une plaque chauffante (3.2) qui est disposée en dessous de la coupelle pour chauffer le liquide dans la coupelle ; dans lequel la plaque chauffante (3.2) est disposée à l'extérieur de l'aimant d'entraînement (3.1) en direction radiale.

8. Dispositif servant à faire mousser du lait selon la revendication 1, dans lequel l'assemblage (3) faisant office de corps de récipient en forme de coupelle comprend en outre une carte de circuits de commande (3.4) ; dans lequel la carte de circuits de commande (3.4) peut entraîner le moteur d'entraînement (3.3) pour qu'il démarre progressivement à partir d'une petite vitesse jusqu'à une grande vitesse et jusqu'à atteindre la tension de régime.

9. Dispositif servant à faire mousser du lait selon les revendications 7 et 8, dans lequel la carte de circuits de commande (3.4) commande la mise en service à la fois du moteur d'entraînement (3.3) et de la plaque chauffante (3.2) afin d'obtenir des boissons à des températures différentes.

10. Dispositif servant à faire mousser du lait selon la revendication 1, dans lequel l'assemblage (3) faisant office de corps de récipient en forme de coupelle comprend en outre un connecteur d'alimentation supérieur (3.5) ; dans lequel le dispositif servant à faire mousser du lait comprend en outre une base d'alimentation électrique (4), tandis que la base d'alimentation électrique (4) comprend un connecteur d'alimentation inférieur (4.1), les deux connecteurs (3.5 ; 4.1) étant reliés l'un à l'autre pour fournir une alimentation.

11. Dispositif servant à faire mousser du lait selon la revendication 10, dans lequel le connecteur d'alimentation supérieur (3.5) peut mettre en oeuvre une rotation de 360° par rapport au connecteur d'alimentation inférieur (4.1).

12. Dispositif servant à faire mousser du lait selon la revendication 1, dans lequel la douille de coupelle (2.1) possède une encoche (3.8) à son extrémité supérieure, tandis que la poignée (2.1) de l'assemblage faisant office d'agitateur s'étend à travers l'encoche (3.8) de la douille de coupelle et fait saillie par rapport à la coupelle ; dans lequel la poignée d'agitateur (2.1) possède une saillie de positionnement (3.9) qui entre en contact avec la douille de coupelle (3.7) et facilite le positionnement de la poignée d'agitateur (2.1).

13. Dispositif servant à faire mousser du lait selon la revendication 1, dans lequel l'assemblage (3) faisant office de corps de récipient en forme de coupelle comprend en outre une plaque chauffante (3.2) qui est disposée en dessous de la coupelle pour chauffer le liquide dans la coupelle et dans lequel l'assemblage (3) faisant office de corps de récipient en forme de coupelle est amovible et la coupelle (3.6) peut être détachée de la plaque chauffante (3.2) de l'assemblage (3) faisant office de corps de récipient en forme de coupelle.
